# EUROPEAN PATENT SPECIFICATION

(11) **EP 1 563 735 B1**
(45) Date of publication and mention of the grant of the patent: **18.11.2009**
(21) Application number: 04003503.2
(22) Date of filing: 17.02.2004
(51) Int. Cl.: A01N 53/06, A01N 43/32, D06M 16/00, D06M 23/02

(54) **Fabric protectant**
Gewebeschutzmittel
Agent de protection de tissus

(43) Date of publication of application: 17.08.2005
(73) Proprietor: Sumitomo Chemical Company, Limited, Tokyo 104-8260 (JP)
(72) Inventor: Kawasaki, Maki, Toyonaka-shi, Osaka (JP); Matsunaga, Tadahiro, Kobe-shi, Hyogo (JP)
(74) Representative: Henkel, Feiler & Hänzel

(56) References cited:
- EP-A- 0 387 078
- EP-A- 0 962 140
- US-B1- 6 225 495
- DATABASE WPI Section Ch, Week 198719 Derwent Publications Ltd., London, GB; Class A97, AN 1987-132503 XP002288843 & JP 62 072601 A (OSAKA SEIYAKU KK) 3 April 1987 (1987-04-03)

## Description

### Field of the Invention

This invention relates to a fabric protectant, which is useful for controlling insects which are harmful to fabric or for protecting the fabric from the insects.

### Background Art

Hitherto, it is known that various ester compounds of tetrafluorobenzyl alcohol given by formula (1): 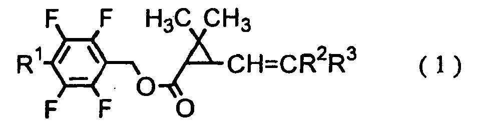 wherein R¹ represents a hydrogen atom, methyl group, methoxy group or methoxymethyl group, and R² and R³ independently represent a chlorine atom, hydrogen atom or methyl group,
are effective for controlling insects which are harmful to fabric in USP-6,225,495, USP-6,294,576, USP-4,889,872 and so on.

In general, fabric protectant is used in the package for preventing damage of fabric by direct contact of the fabric protectant with the fabric: However, the effect of the fabric protectant may decrease by absorption of the active ingredient in the fabric protectant into the envelope.

EP 0 387 078 A1 discloses an insect-proofing product comprising trioxane and empenthrin [(RS)-1-ethynyl-2-methylpent-2-enyl-(1R)-cis,trans-crysanthemate]. In Comparative Example 5 of said document a package comprising 2,4,6-triisopropyl-1,3,5-trioxane and empenthrin is disclosed.

### Summary of the Invention

The present invention provides a fabric protectant which comprises an ester compound given by formula (1): 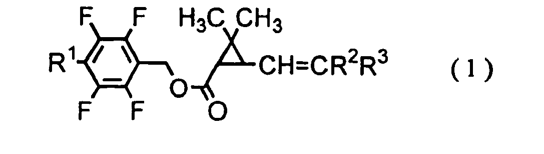 wherein R¹ represents a hydrogen atom, methyl group, methoxy group or methoxymethyl group, and R² and R³ independently represent a chlorine atom, hydrogen atom or methyl group,
and 2,4,6-triisopropyl-1,3,5-trioxane are enveloped in a film selected from the group consisting of polyethylene having 0.91 to 0.94 g/cm³ of density, copolymer of ethylene and vinyl acetate, and copolymer of ethylene and methyl metacrylate.

### Disclosure of the Invention

In the present invention, the ester compound given by formula (1) and 2,4,6-triisopropyl-1,3,5-trioxane are enveloped in a film selected from the group consisting of polyethylene having 0.91 to 0.94 g/cm³ of density, copolymer of ethylene and vinyl acetate, and copolymer of ethylene and methyl metacrylate.

Examples of the ester compound given by formula (1) include 2,3,5,6-tetrafluoro-4-methoxymethylbenzyl 3-(1-propenyl)-2,2-dimethylcyclopropanecarboxylate, 2,3,5,6-tetrafluoro-4-methylbenzyl 3-(1-propenyl)-2,2-dimethylcyclopropanecarboxylate, 2,3,5,6-tetrafluorobenzyl 3-(2,2-dichlorovinyl)-2,2-dimethylcyclopropanecarboxylate, 2,3,5,6-tetrafluoro-4-methoxymethylbenzyl 3-(2-methyl-1-propenyl)-2,2-dimethylcyclopropanecarboxylate, 2,3,5,6-tetrafluoro-4-methoxybenzyl 3-(1-propenyl)-2,2-dimethylcyclopropanecarboxylate and 2,3,5,6-tetrafluoro-4-methoxybenzyl 3-(2-methyl-1-propenyl)-2,2-dimethylcyclopropanecarboxylate. The ester compounds given by formula (1) can be prepared by known methods, for example, the methods described in USP-6,225,495, USP-6,294,576 and USP-4,889,872. The ester compounds have stereoisomers based on the cyclopropane ring and carbon-carbon double bond, and any active isomers and mixtures thereof can be utilized. Further, 2,4,6-triisopropyl-1,3,5-trioxane is a known compound and can be obtained on the market.

In the present invention, the composition enveloped in the film comprises the ester compound given by formula (1) and 2,4,6-triisopropyl-1,3,5-trioxane. The composition may essentially consist of the ester compound given by formula (1) and 2,4,6-triisopropyl-1,3,5-trioxane. In the present invention, the weight ratio of the ester compound given by formula (1) to 2,4,6-triisopropyl-1,3,5-trioxane is usually within the range of 1:8000 to 1:20, preferably 1:4000 to 1:50 by weight. The composition can contain two or more ester compounds given by formula (1). Further, it can contain sublimate fungicide or volatile fungicide such as 3-methyl-4-isopropylphenol, thymol, carvacrol, 4-chloro-3,5-dimethylphenol, 4-chloro-3-methylphenol and hinokitiol.

The composition can be, for example, prepared by mixing the ester compound given by formula (1) and 2,4,6-triisopropyl-1,3,5-trioxane, and optionally the other component, and then pressing to give a tablet. Further, it can be prepared by mixing and melting them under heating, and then putting the melted mixture into a container and cool it to room temperature to form a suitably formed composition. The temperature for melting the mixture is usually within the range of 70 to 200°C.

The composition is enveloped in a film selected from the group consisting of polyethylene having 0.91 to 0.94 g/cm³ of density, copolymer of ethylene and vinyl acetate, and copolymer of, ethylene and methyl metacrylate.

The polyethylene having 0.91 to 0.94 g/cm³ of density can be obtained on the market as low density polyethylene (LDPE) or linear low density polyethylene (LLDPE). The copolymer of ethylene and vinyl acetate (EVA) and the copolymer of ethylene and methyl metacrylate (EMMA) are also can be obtained on the market. In general, the thickness of the film is 10 to 100µm, preferably 20 to 80µm.

The envelope has generally 0.05 to 50g, preferably 0.5 to 5g, of the above-described composition therein. The envelope has usually one composition therein; thus, the weight of the composition is usually 0.05 to 50g, preferably 0.5 to 5g.

In the fabric protectant of the present invention, the whole of the above-described composition is usually enveloped in the above-described film. Namely, the fabric protectant can be produced by enveloping the composition in the film entirely or by putting the composition between two sheets of the film and then sealing the edge under heating. However, the fabric protectant of the present invention may have a part of the other material than polyethylene having 0.91 to 0.94 g/cm³ of density, EVA and EMMA in the envelope. The material should be non-permeable to the ester compound given by formula (1). Examples of the material include acrylonitrile-butadiene-styrene (ABS) resin, polyethylene terephthalate (PET) resin, polycarbonate (PC) resin, ethylene-vinyl alcohol copolymer resin and aluminum. The fabric protectant of the present invention can be also obtained by putting the composition in the container made of the material having at least one opening and then covering the opening with polyethylene having 0.91 to 0.94 g/cm³ of density, EVA or EMMA.

The fabric protectant of the present invention is usually kept in a sealed package, wherein the package is made of non-permeable material such as aluminum and the like, and the composition comprising the ester compound given by formula (1) and 2,4,6-triisopropyl-1,3,5-trioxane is not diffused through the package. When the fabric protectant is used, the package is torn and the fabric protectant is taken out to provide for controlling insects which are harmful to fabric and protecting fabric from the insects.

The fabric protectant may be used in various ways; usually, it is placed in the vicinity of fabric and,for instance, it may be directly placed in a cabinet drawer, or may be packed in an appropriate container and slung up in a wardrobe. The amount of the ester compound given by formula (1) used for controlling the insects or protecting the fabric is usually 5 to 1500mg, preferably 50 to 1200mg per 1m³ of space. For example, 2.5 to 60mg of the ester compound given by formula (1) are sufficient to give effect for controlling the insects for 6 months in a 0.05m³ drawer.

Examples of said fabric to be protected by the fabric protectant of the present invention include clothes, underwear, textile, stockings and gloves. Examples of the material of the fabric include animal fibers such as silk, wool, cashmere and mohair; plant fibers such as cotton and hemp; regenerated fibers such as rayon; semi-synthetic fibers such as acetate fiber and triacetate fiber; and synthetic fibers such as nylon, acryl fiber and polyester fiber.

Examples of the harmuful insects include *Attagenus unicolor japonicus* (black carpet beetle), *Authrenus verbasci* (varied carpet beetle), *Dermestes maculates* (hide beetle), *Gibbium aequinoctiale, Tinea translucens* (casemaking clothes moth) and *Tineola bisselliella* (webbing clothes moth).

The present fabric protectant generally has a synergistic effect for controlling insects. In addition, it is easy to identify the end point of the fabric protectant as the disappearance of the composition in the envelope is easily observed when the composition essentially consisting of the ester compound given by formula (1) and 2,4,6-triisopropyl-1,3,5-trioxane in the envelope is used.

Further, the effect of the ester compound given by formula (1) and 2,4,6-triisopropyl-1,3,5-trioxane is not decreased by the envelope in the present invention, rather it tends to be increased by enveloped in the above-mentioned film.

### Brief Description of the Drawing

Fig. 1 represents an embodiment of the fabric protectant of the present invention.
Fig. 2 is a cross section representing an embodiment of the fabric protectant of the present invention.
Fig. 3 is a cross section representing an embodiment of the fabric protectant of the present invention, which is in the container of the material non-permeable to the ester compound given by formula (1) and sealed on the opening with a film consisting of polyethylene having 0.91 to 0.94 g/cm³ of density, copolymer of ethylene and vinyl acetate, or copolymer of ethylene and methyl metacrylate.

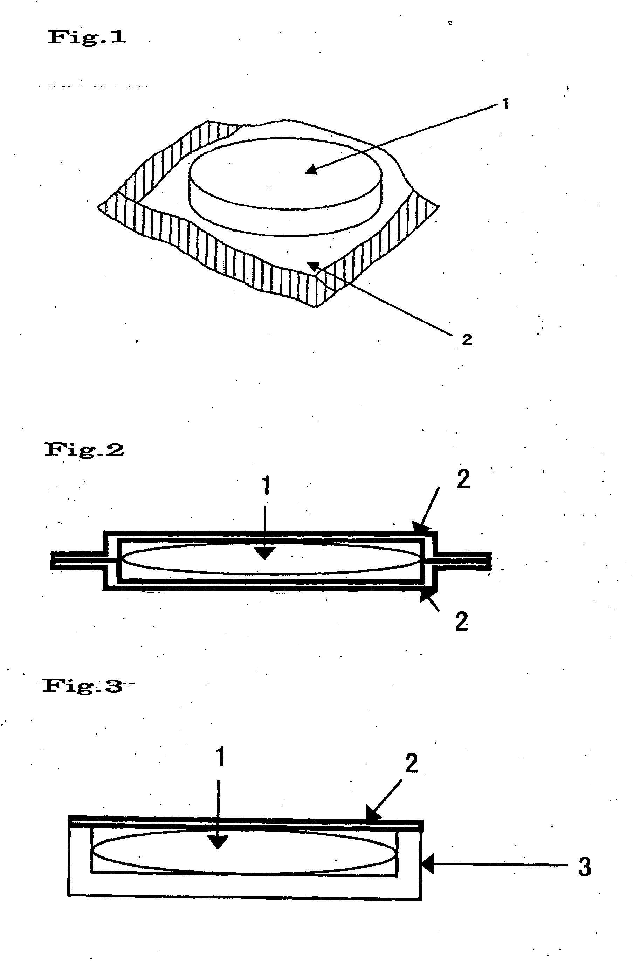

In the Figs. 1-3, l represents the composition containing the ester compound given by formula (1) and 2,4,6-triisopropyl-1,3,5-trioxane, 2 represents a film of polyethylene having 0.91 to 0.94 g/cm³ of density, copolymer of ethylene and vinyl acetate, or copolymer of ethylene and methyl metacrylate, and 3 represents a container of the material non-permeable to the ester compound given by formula (1).

### Examples

The present invention is explained in more detail by the following examples.

### Production Example 1

Ten milligrams (10mg) of 2,3,5,6-tetrafluoro-4-methylbenzyl (1R)-trans-3-(1-propenyl(Z/E=8/1))-2,2-dimethylcyclopropanecarboxylate and 2000mg of 2,4,6-triisopropyl-1,3,5-trioxane were uniformly mixed and pressed (4000kg) to give a disk-shaped tablet (3cm in diameter and 3mm in thickness). The tablet was put in linear low density polyethylene film folded in two (5cm × 10cm, 30µm in thickness, 0.92g/cm³ in density, UB-1 produced by Tama-Poly Co.) and sealed on three edges by heating to give a fabric protectant of the present invention. (cf. Fig. 1)

### Production Example 2

Ten milligrams (10mg) of 2,3,5,6-tetrafluoro-4-methylbenzyl (1R)-trans-3-(1-propenyl(Z/E=8/1))-2,2-dimethylcyclopropanecarboxylate and 2000mg of 2,4,6-triisopropyl-1,3,5-trioxane were uniformly mixed and pressed (4000kg) to give a disk-shaped tablet (3cm in diameter and 3mm in thickness). The tablet was put in EVA film folded in two (5cm × 10cm, 50µm in thickness, content of vinyl acetate: 5% by weight, SB-5 produced by Tama-Poly Co.) and sealed on three edges by heating to give a fabric protectant of the present invention. (cf. Fig. 1)

### Production Example 3

Ten milligrams (10mg) of 2,3,5,6-tetrafluoro-4-methylbenzyl (1R)-trans-3-(1-propenyl(Z/E=8/1))-2,2-dimethylcyclopropanecarboxylate and 2000mg of 2,4,6-triisopropyl-1,3,5-trioxane were uniformly mixed and pressed (4000kg) to give a disk-shaped tablet (3cm in diameter and 3mm in thickness). The tablet was put in EMMA film folded in two (5cm × 10cm, 40µm in thickness, content of methyl metacrylate: 5% by weight, WD203-1 produced by Sumitomo Chemical Co.) and sealed on three edges by heating to give a fabric protectant of the present invention. (cf. Fig. 1)

### Production Example 4

Ten milligrams (10mg) of 2,3,5,6-tetrafluoro-4-methylbenzyl (1R)-trans-3-(1-propenyl(Z/E=8/1))-2,2-dimethylcyclopropanecarboxylate and 2000mg of 2,4,6-triisopropyl-1,3,5-trioxane were uniformly mixed and pressed (4000kg) to give a disk-shaped tablet (3cm in diameter and 3mm in thickness). The tablet was put in low density polyethylene film folded in two (5cm × 10cm, 30µm in thickness, 0.925g/cm³ in density, V-1 produced by Tama-Poly Co.) and sealed on three edges by heating to give a fabric protectant of the present invention.

### Production Example 5

The same procedure was carried out as Production Example 1 except that the thickness of the linear low density polyethylene film (UB-1) was 60µm in place of 30µm to give a fabric protectant of the present invention.

### Production Example 6

The same procedure was carried out as Production Example 4 except that the thickness of the linear low density polyethylene film (V-1) was 60µm in place of 30µm to give a fabric protectant of the present invention.

### Production Example 7

Two thousand milligrams (2000mg) of 2,4,6-triisopropyl-1,3,5-trioxane were pressed (4000kg) to give a disk-shaped tablet (3cm in diameter and 3mm in thickness). A hexane solution of 2,3,5,6-tetrafluoro-4-methylbenzyl (1R)-trans-3-(1-propenyl(Z/E=8/1))-2,2-dimethylcyclopropanecarboxylate (ester compound/ hexane = 1/7.1 by weight) is uniformly painted on the tablet and dried. The tablet was put into the cylindrical container made of copolymer of ethylene-vinyl alcohol (7cm in diameter, 0.8cm in height) having an opening on the upper side. The opening is sealed on EMMA film (40µm in thickness, content of methyl metacrylate: 15% by weight, WH204 produced by Sumitomo Chemical Co.) to give a fabric protectant of the present invention. (cf. Fig. 3)

### Production Example 8

Ten milligrams (10mg) of 2,3,5,6-tetrafluorobenzyl (1R)-trans-3-(2,2-dichlorovinyl)-2,2-dimethylcyclopropanecarboxylate and 2000mg of 2,4,6-triisopropyl-1,3,5-trioxane are uniformly mixed and pressed (4000kg) to give a disk-shaped tablet (3cm in diameter and 3mm in thickness). The tablet is put in linear low density polyethylene film folded in two (5cm × 10cm, 30µm in thickness, 0.92g/cm³ in density, UB-1 produced by Tama-Poly Co.) and sealed on three edges by heating to give a fabric protectant of the present invention. (cf. Fig. 1)

### Production Example 9

Ten milligrams (10mg) of 2,3,5,6-tetrafluorobenzyl (1R)-trans-3-(2,2-dichlorovinyl)-2,2-dimethylcyclopropanecarboxylate and 2000mg of 2,4,6-triisopropyl-1,3,5-trioxane are uniformly mixed and pressed (4000kg) to give a disk-shaped tablet (3cm in diameter and 3mm in thickness). The tablet is put in EVA film folded in two (5cm × 10cm, 50µm in thickness, content of vinyl acetate: 5% by weight, SB-5 produced by Tama-Poly Co.) and sealed on three edges by heating to give a fabric protectant of the present invention. (cf. Fig. 1)

### Production Example 10

Ten milligrams (10mg) of 2,3,5,6-tetrafluorobenzyl (1R)-trans-3-(2,2-dichlorovinyl)-2,2-dimethylcyclopropanecarboxylate and 2000mg of 2,4,6-triisopropyl-1,3,5-trioxane are uniformly mixed and pressed (4000kg) to give a disk-shaped tablet (3cm in diameter and 3mm in thickness). The tablet is put in EMMA film folded in two (5cm × 10cm, 40µm in thickness, content of methyl metacrylate: 10% by weight, WD201 produced by Sumitomo Chemical Co.) and sealed on three edges by heating to give a fabric protectant of the present invention. (cf. Fig. 1)

### Production Example 11

Two thousand milligrams (2000mg) of 2,4,6-triisopropyl-1,3,5-trioxane are pressed (4000kg) to give a disk-shaped tablet (3cm in diameter and 3mm in thickness). An acetone solution of 2,3,5,6-tetrafluoro-4-methylbenzyl (1R)-trans-3-(1-propenyl(Z/E=8/1))-2,2-dimethylcyclopropanecarboxylate (ester compound/ acetone = 1/29 by weight) is uniformly painted on the tablet and dried. The tablet is put into the cylindrical container made of copolymer of ethylene-vinyl alcohol (7cm in diameter, 0.8cm in height) having an opening on the upper side. The opening is sealed on linear low density polyethylene film (50µm in thickness, 0.924g/cm³ in density, F200-0 produced by Sumitomo Chemical Co.) to give a fabric protectant of the present invention. (cf. Fig. 3)

### Production Example 12

Two thousand milligrams (2000mg) of 2,4,6-triisopropyl-1,3,5-trioxane are pressed (4000kg) to give a disk-shaped tablet (3cm in diameter and 3mm in thickness). An acetone solution of 2,3,5,6-tetrafluoro-4-methylbenzyl (1R)-trans-3-(1-propenyl(Z/E=8/1))-2,2-dimethylcylopropanecarboxylate (ester compound/ acetone = 1/29 by weight) is uniformly painted on the tablet and dried. The tablet is put into the cylindrical container made of copolymer of ethylene-vinyl alcohol (7cm in diameter, 0.8cm in height) having an opening on the upper side. The opening is sealed on EVA film (50µm in thickness, content of vinyl acetate: 5% by weight, SB-5 produced by Tama-Poly Co.) to give a fabric protectant of the present invention. (cf. Fig. 3)

### Production Example 13

Ten milligrams (10mg) of 2,3,5,6-tetrafluoro-4-methylbenzyl (1R)-trans-3-(1-propenyl(Z/E=8/1))-2,2-dimethylcyclopropanecarboxylate and 4000mg of 2,4,6-triisopropyl-1,3,5-trioxane were uniformly mixed and pressed (4000kg) to give a disk-shaped tablet (3cm in diameter and 3mm in thickness). The tablet was put in linear low density polyethylene film folded in two (5cm X 10cm, 30µm in thickness, 0.91g/cm³ in density and sealed on three edges by heating to give a fabric protectant of the present invention. (cf. Fig. 1)

### Production Example 14

Ten milligrams (10mg) of 2,3,5,6-tetrafluoro-4-methylbenzyl (1R)-trans-3-(1-propenyl(Z/E=8/1))-2,2-dimethylcyclopropanecarboxylate and 2000mg of 2,4,6-triisopropyl-1,3,5-trioxane were uniformly mixed and pressed (4000kg) to give a disk-shaped tablet (3cm in diameter and 3mm in thickness). The tablet was put in linear low density polyethylene film folded in two (5cm × 10cm, 30µm in thickness, 0.91g/cm³ in density and sealed on three edges by heating to give a fabric protectant of the present invention. (cf. Fig. 1)

### Comparative Example 1

Ten milligrams (10mg) of 2,3,5,6-tetrafluoro-4-methylbenzyl (1R)-trans-3-(1-propenyl(Z/E=8/1))-2,2-dimethylcyclopropanecarboxylate and 4000mg of 2,4,6-triisopropyl-1,3,5-trioxane were uniformly mixed and pressed (4000kg) to give a disk-shaped tablet (3cm in diameter and 3mm in thickness).

### Comparative Example 2

Ten milligrams (10mg) of 2,3,5,6-tetrafluoro-4-methylbenzyl (1R)-trans-3-(1-propenyl(Z/E=8/1))-2,2-dimethylcyclopropanecarboxylate and 2000mg of 2,4,6-triisopropyl-1,3,5-trioxane were uniformly mixed and pressed (4000kg) to give a disk-shaped tablet (3cm in diameter and 3mm in thickness).

### Test Example 1

In a box (725cm × 427cm × 158cm), two fabric protectants of the present invention were put and kept at 25±2°C. After the designated days, two bags (4.5cm × 4.5cm) made of cotton cloth (0.2mm in depth) having 10 to 15 eggs of *Tineola bisselliella* (webbing clothes moth) therein, respectively, were set near the fabric protectants. After one week, the bags were opened and the mortality was observed. The results are given in Table 1.

**Table 1**

| Fabric Protectant | Mortality (%) | |
|---|---|---|
| | After 14 days | After 70 days |
| Production Example 1 | 100 | 100 |
| Production Example 4 | 100 | 100 |
| Production Example 5 | 100 | 96.7 |
| Production Example 6 | 100 | 100 |

### Test Example 2

In a box (725cm × 427cm × 158cm), two fabric protectants of the present invention were put and kept at 25±2°C. After the designated days, two bags (4.5cm × 4.5cm) made of cotton cloth (0.2mm in depth) having 10 to 15 eggs of *Tineola bisselliella* (webbing clothes moth) therein, respectively, were set near the fabric protectants. After one week, the bags were opened and the mortality was observed. The results are given in Table 2.

**Table 2**

| Fabric Protectant | Mortality (%) | | |
|---|---|---|---|
| | After 7 days | After 14 days | After 70 days |
| Production Example 2 | 100 | 100 | 100 |

### Test Example 3

In a box (725cm × 427cm × 158cm), two fabric protectants of the present invention were put and kept at 25±2°C. After the designated days, two bags (4.5cm × 4.5cm) made of cotton cloth (0.2mm in depth) having 10 to 15 eggs of *Tineola bisselliella* (webbing clothes moth) therein, respectively, were set near the fabric protectants. After one week, the bags were opened and the mortality was observed. The results are given in Table 3.

**Table 3**

| Fabric Protectant | Mortality (%) |
|---|---|
| | After 7 days |
| Production Example 3 | 100 |

### Test Example 4

In a box (725cm × 427cm × 158cm), two fabric protectants of the present invention were put and kept at 25±2°C. After the designated days, two bags (4.5cm × 4.5cm) made of cotton cloth (0.2mm in depth) having 10 larvae of *Tineola bisselliella* (webbing clothes moth) and cotton cloth (1cm × 1cm) therein, respectively, were set near the fabric protectants. After one week, the bags were opened and the mortality was observed. The results are given in Table 4.

**Table 4**

| Fabric Protectant | Mortality (%) | |
|---|---|---|
| | After 7 days | After 40days |
| Production Example 13 | 100 | 100 |
| Production Example 14 | 85 | 100 |
| Comparative Example 1 | 60 | 100 |
| Comparative Example 2 | 65 | 100 |

As shown in Table 4, the fabric protectant of the present invention does not decrease the effect by enveloping, or rather increases the effect at early stage.

## Claims

1. A fabric protectant which comprises an ester compound given by formula (1) : 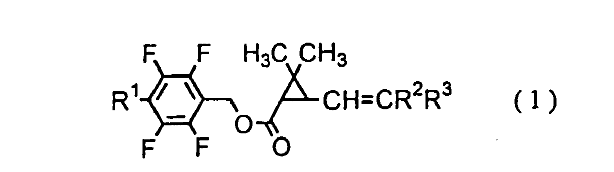 wherein R¹ represents a hydrogen atom, methyl group, methoxy group or methoxymethyl group, and R² and R³ independently represent a chlorine atom, hydrogen atom or methyl group,
and 2,4,6-triisopropyl-1,3,5-trioxane are enveloped in a film selected from the group consisting of polyethylene having 0.91 to 0.94 g/cm³ of density, copolymer of ethylene and vinyl acetate, and copolymer of ethylene and methyl metacrylate.

2. The fabric protectant according to claim 1, wherein the film is polyethylene having 0.91 to 0.94 g/cm³ of density.

3. The fabric protectant according to claim 1, wherein the film is copolymer of ethylene and vinyl acetate.

4. The fabric protectant according to claim 1, wherein the film is copolymer of ethylene and methyl metacrylate.

5. The fabric protectant according to claim 1, wherein the ester compound is 2,3,5,6-tetrafluoro-4-methoxymethylbenzyl 3-(1-propenyl)-2,2-dimethylcyclopropanecarboxylate, 2,3,5,6-tetrafluoro-4-methylbenzyl 3-(1-propenyl)-2,2-dimethylcyclopropanecarboxylate, 2,3,5,6-tetrafluorobenzyl 3-(2,2-dichlorovinyl)-2,2-dimethylcyclopropanecarboxylate, 2,3,5,6-tetrafluoro-4-methoxymethylbenzyl 3-(2-methyl-1-propenyl)-2,2-dimethylcyclopropanecarboxylate, 2,3,5,6-tetrafluoro-4-methoxybenzyl 3-(1-propenyl)-2,2-dimethylcyclopropanecarboxylate or 2,3,5,6-tetrafluoro-4-methoxybenzyl 3-(2-methyl-1-propenyl)-2,2-dimethylcyclopropanecarboxylate.

6. The fabric protectant according to claim 1, wherein the ester compound is 2,3,5,6-tetrafluoro-4-methylbenzyl 3-(1-propenyl)-2,2-dimethylcyclopropanecarboxylate.

7. The fabric protectant according to claim 1, wherein the ester compound is 2,3,5,6-tetrafluorobenzyl 3-(2,2-dichlorovinyl)-2,2-dimethylcyclopropanecarboxylate.

## Patentansprüche

1. Gewebeschutzmittel, umfassend eine Esterverbindung der Formel (1): 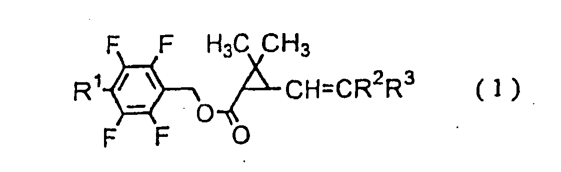 worin R¹ für ein Wasserstoffatom, eine Methylgruppe, eine Methoxygruppe oder eine Methoxymethylgruppe steht und R² und R³ unabhängig voneinander für ein Chloratom, ein Wasserstoffatom oder eine Methylgruppe stehen,
und 2,4,6-Triisopropyl-1,3,5-trioxan eingehüllt in einem Film, der aus der Gruppe von Polyethylen mit einer Dichte von 0,91 bis 0,94 g/cm³, einem Copolymer von Ethylen und Vinylacetat und einem Copolymer von Ethylen und Methylmethacrylat ausgewählt ist.

2. Gewebeschutzmittel nach Anspruch 1, wobei der Film ein Polyethylen mit einer Dichte von 0,91 bis 0,94 g/cm³ ist.

3. Gewebeschutzmittel nach Anspruch 1, wobei der Film ein Copolymer von Ethylen und Vinylacetat ist.

4. Gewebeschutzmittel nach Anspruch 1, wobei der Film ein Copolymer von Ethylen und Methylmethacrylat ist.

5. Gewebeschutzmittel nach Anspruch 1, wobei die Esterverbindung 2,3,5,6-Tetrafluor-4-methoxymethylbenzyl-3-(1-propenyl)-2,2-dimethylcyclopropancarboxylat, 2,3,5,6-Tetrafluor-4-methylbenzyl-3-(1-propenyl)-2,2-dimethylcyclopropancarboxylat, 2,3,5,6-Tetrafluorbenzyl-3-(2,2-dichlorvinyl)-2,2-dimethylcyclopropancarboxylat, 2,3,5,6-Tetrafluor-4-methoxymethylbenzyl-3-(2-methyl-1-propenyl)-2,2-dimethylcyclopropancarboxylat, 2,3,5,6-Tetrafluor-4-methoxybenzyl-3-(1-propenyl)-2,2-dimethylcyclopropancarboxylat oder 2,3,5,6-Tetrafluor-4-methoxybenzyl-3-(2-methyl-1-propenyl)-2,2-dimethylcyclopropancarboxylat ist.

6. Gewebeschutzmittel nach Anspruch 1, wobei die Esterverbindung 2,3,5,6-Tetrafluor-4-methylbenzyl-3-(1-propenyl)-2,2-dimethylcyclopropancarboxylat ist.

7. Gewebeschutzmittel nach Anspruch 1, wobei die Esterverbindung 2,3,5,6-Tetrafluorbenzyl-3-(2,2-dichlorvinyl)-2,2-dimethylcyclopropancarboxylat ist.

## Revendications

1. Agent de protection de tissu qui comprend un composé ester donné par la formule (1): 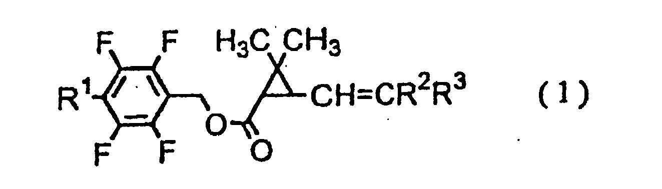 dans laquelle R¹ représente un atome d'hydrogène, un groupe méthyle, un groupe méthoxy ou un groupe méthoxyméthyle, et R² et R³ représentent indépendamment un atome de chlore, un atome d'hydrogène ou un groupe méthyle,
et du 2,4,6-triisopropyl-1,3,5-trioxane sont enveloppés dans un film choisi dans le groupe constitué d'un polyéthylène ayant une densité de 0,91 à 0,94 g/cm³, d'un copolymère d'éthylène et d'acétate de vinyle, et d'un copolymère d'éthylène et de méthacrylate de méthyle.

2. Agent de protection de tissu selon la revendication 1, dans lequel le film est un polyéthylène ayant une densité de 0,91 à 0,94 g/cm³.

3. Agent de protection de tissu selon la revendication 1, dans lequel le film est un copolymère d'éthylène et d'acétate de vinyle.

4. Agent de protection de tissu selon la revendication 1, dans lequel le film est un copolymère d'éthylène et de méthacrylate de méthyle.

5. Agent de protection de tissu selon la revendication 1, dans lequel le composé ester est le 3-(1-propényl)-2,2-diméthylcyclopropanecarboxylate de 2,3,5,6-tétrafluoro-4-méthoxyméthylbenzyle, le 3-(1-propényl)-2,2-diméthylcyclopropanecarboxylate de 2,3,5,6-tétrafluoro-4-méthylbenzyle, le 3-(2,2-dichlorovinyl)-2,2-diméthylcyclopropanecarboxylate de 2,3,5,6-tétrafluorobenzyle, le 3-(2-méthyl-1-propényl)-2,2-diméthylcyclopropanecarboxylate de 2,3,5,6-tétrafluoro-4-méthoxyméthylbenzyle, le 3-(1-propényl)-2,2-diméthylcyclopropanecarboxylate de 2,3,5,6-tétrafluoro-4-méthoxybenzyle ou le 3-(2-méthyl-1-propényl)-2,2-diméthylcyclopropanecarboxylate de 2,3,5,6-tétrafluoro-4-méthoxybenzyle.

6. Agent de protection de tissu selon la revendication 1, dans lequel le composé ester est le 3-(1-propényl)-2,2-diméthylcyclopropanecarboxylate de 2,3,5,6-tétrafluoro-4-méthylbenzyle.

7. Agent de protection de tissu selon la revendication 1, dans lequel le composé ester est le 3-(2,2-dichlorovinyl)-2,2-diméthylcyclopropanecarboxylate de 2,3,5,6-tétrafluorobenzyle.
